# EUROPEAN PATENT APPLICATION

(11) **EP 4 769 138 A1**
(43) Date of publication of application: **01.07.2026**
(21) Application number: 24864692.9
(22) Date of filing: 12.09.2024
(51) Int. Cl.: G06F 9/455

(54) **CLOUD SERVICE PROVIDING METHOD AND SYSTEM**

(30) Priority: 14.09.2023 CN 202311192062; 08.01.2024 CN 202410024065
(71) Applicant: Huawei Cloud Computing Technologies Co., Ltd., Gui'an New District, Guizhou 550025 (CN)
(72) Inventor: YE, Chuan, Guiyang, Guizhou 550025 (CN); XIE, Huaguo, Guiyang, Guizhou 550025 (CN)
(74) Representative: Maiwald GmbH
(86) International application number: PCT/CN2024/118484
(87) International publication number: WO 2025/055978

(57) **Abstract**

This application discloses a cloud service providing method and system, and relates to the field of cloud service technologies. The method is applied to a cloud service system. The cloud service system is configured to provide a cloud service based on a virtual instance. The method includes: A first host runs an active virtual instance, where the active virtual instance is used for providing a cloud service for a user; a second host runs a first standby virtual instance; the first host stores, in a first shared memory during running of the active virtual instance, memory data needed for running the active virtual instance; and the second host runs, when the first host fails, the first standby virtual instance based on the memory data obtained from the first shared memory, to cause the first standby virtual instance to provide a cloud service for the user. This application improves timeliness and efficiency of hot standby of memory data, provides a real-time redundancy backup capability, and helps ensure performance of services provided based on backed-up memory data.

## Description

This application claims priorities to Chinese Patent Application No. 202311192062.2, filed on September 14, 2023 and entitled "CLOUD SERVICE SYSTEM", and to Chinese Patent Application No. 202410024065.3, filed on January 8, 2024 and entitled "CLOUD SERVICE PROVIDING METHOD AND SYSTEM", both of which are incorporated herein by reference in their entireties.

### TECHNICAL FIELD

This application relates to the field of cloud service technologies, and in particular, to a cloud service providing method and system.

### BACKGROUND

In the field of cloud service technologies, a cloud service system usually provides a cloud service for a user by running a virtual instance. During running of the virtual instance, the cloud service system usually backs up memory data needed for running the virtual instance, so that when hardware on which the virtual instance depends fails, a cloud service can continue to be provided for the user based on backed-up memory data.

Currently, when memory data needed for running a virtual instance on a first host is backed up to a second host, checkpoint (checkpoint) events are usually periodically initiated, to periodically send the memory data to the second host, so as to achieve an objective of backing up the memory data.

However, a manner of backing up the memory data based on the checkpoint events results in hysteresis, affecting performance of services provided based on backed-up memory data.

### SUMMARY

This application provides a cloud service providing method and system. This application improves timeliness and efficiency of hot standby of memory data, provides a real-time redundancy backup capability, and helps ensure performance of services provided based on backed-up memory data. Technical solutions provided in this application are as follows.

According to a first aspect, this application provides a cloud service providing method. The method is applied to a cloud service system. The cloud service system is configured to provide a cloud service based on a virtual instance. The cloud service system includes a first host and a second host. A first shared memory is configured between the first host and the second host, and both the first host and the second host can obtain data in the first shared memory. The method includes: The first host runs an active virtual instance, where the active virtual instance is used for providing a cloud service for a user; the second host runs a first standby virtual instance; the first host stores, in the first shared memory during running of the active virtual instance, memory data needed for running the active virtual instance; and the second host runs, when the first host fails, the first standby virtual instance based on the memory data obtained from the first shared memory, to cause the first standby virtual instance to provide a cloud service for the user.

In this way, hot standby of memory data can be implemented between the first host and the second host through a shared memory. In comparison with a current manner of backing up data based on checkpoint events or another current manner, this manner effectively reduces memory access latency of memory data, improves timeliness and efficiency of hot standby of the memory data, provides a real-time redundancy backup capability, and helps ensure performance of services provided based on backed-up memory data.

In a first implementation of the shared memory, each of a plurality of hosts that use the shared memory is configured with a physical memory, and a host configured to back up data is configured with a virtual memory. The host configured to back up data can obtain, through the virtual memory, memory data stored in a physical memory of another host. For example, the first host is configured with a first physical memory, the second host is configured with a first virtual memory and a second physical memory, and a mapping relationship is established between the first physical memory and the first virtual memory. That the first host stores, in the first shared memory during running of the active virtual instance, the memory data needed for running the active virtual instance includes: The first host stores the memory data in the first physical memory during running of the active virtual instance. Correspondingly, after the first host stores, in the first shared memory during running of the active virtual instance, the memory data needed for running the active virtual instance, the method further includes: During running of the active virtual instance, the second host obtains, by accessing the first virtual memory, the memory data stored in the first physical memory, and stores the memory data in the second physical memory.

In an implementation, a communication bus that supports memory synchronization access semantics is connected between a processor of the first host and a processor of the second host. The processor of the second host can access the first physical memory through the communication bus, and obtain the memory data from the first physical memory.

Optionally, after the first host stores the memory data in the first physical memory, the method further includes: The first host provides a physical address of the memory data in the first physical memory for the second host. Correspondingly, that the second host obtains, by accessing the first virtual memory, the memory data stored in the first physical memory includes: The second host accesses the first virtual memory based on the physical address, to obtain the memory data stored in the first physical memory.

In a second implementation of the shared memory, a plurality of hosts share a physical memory configured on a same host. After memory data in the physical memory is updated, the plurality of hosts can all obtain updated memory data from the physical memory. For example, the cloud service system further includes a third host, and the third host is configured with a third physical memory. That the first host stores, in the first shared memory during running of the active virtual instance, the memory data needed for running the active virtual instance includes: The first host stores the memory data in the third physical memory during running of the active virtual instance. Correspondingly, before the second host runs the first standby virtual instance based on the memory data obtained from the first shared memory, to cause the first standby virtual instance to provide the cloud service for the user, the method further includes: The second host reads the memory data from the third physical memory when the first host fails.

Optionally, after the first host stores the memory data in the third physical memory, the method further includes: The first host provides a physical address of the memory data in the third physical memory for the second host. Correspondingly, that the second host reads the memory data from the third physical memory includes: The second host reads the memory data from the third physical memory based on the physical address.

In the second implementation of the shared memory, the cloud service system can further configure a standby host for the third host. For example, the cloud service system further includes a fourth host. The fourth host is configured with a second virtual memory and a fourth physical memory, and a mapping relationship is established between the third physical memory and the second virtual memory. The method further includes: During running of the active virtual instance, the fourth host obtains, by accessing the second virtual memory, the memory data stored in the third physical memory, and stores the memory data in the fourth physical memory.

Optionally, after the first host stores the memory data in the third physical memory, the method further includes: The first host provides the physical address of the memory data in the third physical memory for the fourth host. Correspondingly, that the fourth host obtains, by accessing the second virtual memory, the memory data stored in the third physical memory includes: The fourth host accesses the second virtual memory based on the physical address, to obtain the memory data stored in the third physical memory.

In an implementation, the physical address is provided through a communication bus that supports memory synchronization access semantics, and/or the physical address is provided through a network. For example, the communication bus may be a high-speed communication bus such as a CXL or a UB. When the plurality of hosts are connected to each other through the communication bus, synchronous memory access of the plurality of hosts is supported.

When information is transferred between the hosts through the communication bus that supports memory synchronization access semantics, because the communication bus supports a direct connection between processors of the hosts, in comparison with a manner of transferring through a network such as a TCP network/an IP network, there is no possibility of a packet loss or congestion failure point introduced by a conventional network device such as a switch or a router. In addition, because the transfer manner supports memory synchronization access semantics, transferring a message through the communication bus achieves lower memory access latency and higher bandwidth. When information such as memory data that needs to be synchronized is transferred between the hosts through the communication bus, an effect similar to inter-process communication can be achieved, to greatly reduce synchronization overheads, greatly improve communication performance, and greatly improve reliability of connections between the hosts. In addition, because bandwidth for transferring the information is independent, resource contention between tenants does not occur. In addition, when the information is transferred through the network and the communication bus, two planes can be established between the first host and the second host in the two manners, to enhance connectivity between the first host and the second host and increase a probability of successful information transfer between the two hosts.

The cloud service system can further configure a standby host for the second host. The cloud service system further includes a fifth host. A second shared memory is configured between the first host and the fifth host, and both the first host and the fifth host can obtain data in the second shared memory. The method further includes: The first host stores, in the second shared memory during running of the active virtual instance, the memory data needed for running the active virtual instance; and when the second host fails, the fifth host runs a second standby virtual instance on the fifth host, and when the first host fails, the fifth host runs the second standby virtual instance based on the memory data obtained from the second shared memory, to cause the second standby virtual instance to provide a cloud service for the user.

In an implementation, the first host is connected to the second host through the communication bus that supports memory synchronization access semantics. That the second host runs, when the first host fails, the first standby virtual instance based on the memory data obtained from the first shared memory includes: When the second host cannot obtain data from the first host through the communication bus, the second host runs the first standby virtual instance based on the memory data obtained from the first shared memory.

According to a second aspect, this application provides a cloud service providing system. The cloud service system is configured to provide a cloud service based on a virtual instance. The cloud service system includes a first host and a second host. A first shared memory is configured between the first host and the second host, and both the first host and the second host can obtain data in the first shared memory. The first host is configured to run an active virtual instance, where the active virtual instance is used for providing a cloud service for a user; the second host is configured to run a first standby virtual instance; the first host is further configured to store, in the first shared memory during running of the active virtual instance, memory data needed for running the active virtual instance; and the second host is further configured to run, when the first host fails, the first standby virtual instance based on the memory data obtained from the first shared memory, to cause the first standby virtual instance to provide a cloud service for the user.

Optionally, the first host is configured with a first physical memory, the second host is configured with a first virtual memory and a second physical memory, and a mapping relationship is established between the first physical memory and the first virtual memory; the first host is specifically configured to store the memory data in the first physical memory during running of the active virtual instance; and during running of the active virtual instance, the second host is further configured to: obtain, by accessing the first virtual memory, the memory data stored in the first physical memory, and store the memory data in the second physical memory.

Optionally, the first host is further configured to provide a physical address of the memory data in the first physical memory for the second host; and the second host is specifically configured to access the first virtual memory based on the physical address, to obtain the memory data stored in the first physical memory.

Optionally, the cloud service system further includes a third host, and the third host is configured with a third physical memory. The first host is specifically configured to store the memory data in the third physical memory during running of the active virtual instance; and the second host is further configured to read the memory data from the third physical memory when the first host fails.

Optionally, the first host is further configured to provide a physical address of the memory data in the third physical memory for the second host; and the second host is specifically configured to read the memory data from the third physical memory based on the physical address.

Optionally, the cloud service system further includes a fourth host. The fourth host is configured with a second virtual memory and a fourth physical memory, and a mapping relationship is established between the third physical memory and the second virtual memory. During running of the active virtual instance, the fourth host is further configured to: obtain, by accessing the second virtual memory, the memory data stored in the third physical memory, and store the memory data in the fourth physical memory.

Optionally, the first host is further configured to provide the physical address of the memory data in the third physical memory for the fourth host; and the fourth host is specifically configured to access the second virtual memory based on the physical address, to obtain the memory data stored in the third physical memory.

Optionally, the physical address is provided through a communication bus that supports memory synchronization access semantics, and/or the physical address is provided through a network.

Optionally, the cloud service system further includes a fifth host, a second shared memory is configured between the first host and the fifth host, and both the first host and the fifth host can obtain data in the second shared memory. The first host is further configured to store, in the second shared memory during running of the active virtual instance, the memory data needed for running the active virtual instance. The fifth host is configured to: when the second host fails, run a second standby virtual instance on the fifth host; and when the first host fails, run the second standby virtual instance based on the memory data obtained from the second shared memory, to cause the second standby virtual instance to provide a cloud service for the user.

Optionally, the first host is connected to the second host through the communication bus that supports memory synchronization access semantics. When the second host cannot obtain data from the first host through the communication bus, the second host is specifically configured to run the first standby virtual instance based on the memory data obtained from the first shared memory.

According to a third aspect, this application provides a compute device, including a storage and a processor. The storage stores program instructions. The processor runs the program instructions to perform the method according to any one of the first aspect and the possible implementations of the first aspect in this application.

According to a fourth aspect, this application provides a compute device cluster, including a plurality of compute devices. The plurality of compute devices include a plurality of processors and a plurality of storages, the plurality of storages store program instructions, and the plurality of processors run the program instructions, so that the compute device cluster performs the method according to any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a compute device, the compute device is caused to perform the method according to any one of the first aspect and the possible implementations of the first aspect in this application.

According to a sixth aspect, this application provides a computer program product including instructions. When the computer program product runs on a computer, the computer is caused to perform the method according to any one of the first aspect and the possible implementations of the first aspect in this application.

### BRIEF DESCRIPTION OF DRAWINGS

FIG. 1 is a diagram of a structure of an implementation scenario related to a cloud service providing method according to an embodiment of this application;
FIG. 2 is a diagram showing functions of hosts implemented by using functional modules according to an embodiment of this application;
FIG. 3 is a diagram of an implementation of a shared memory according to an embodiment of this application;
FIG. 4 is a flowchart of a cloud service providing method according to an embodiment of this application;
FIG. 5 is a flowchart of another cloud service providing method according to an embodiment of this application;
FIG. 6 is a diagram of an implementation of another shared memory according to an embodiment of this application;
FIG. 7 is a flowchart of still another cloud service providing method according to an embodiment of this application;
FIG. 8 is a flowchart of yet another cloud service providing method according to an embodiment of this application;
FIG. 9 is a flowchart of still another cloud service providing method according to an embodiment of this application;
FIG. 10 is a flowchart of yet another cloud service providing method according to an embodiment of this application;
FIG. 11 is a diagram of a structure of a compute device according to an embodiment of this application; and
FIG. 12 is a diagram of a structure of a compute device cluster according to an embodiment of this application.

### DESCRIPTION OF EMBODIMENTS

To make the objectives, technical solutions, and advantages of this application clearer, the following further describes implementations of this application in detail with reference to the accompanying drawings.

For ease of understanding, the following first explains technologies and the background in embodiments of this application.

A host (physical machine, PM) is a physical resource carrying a virtualization technology. The host is also referred to as a physical machine. Generally, a host configured to deploy a virtual instance is a physical server. The physical machine includes a plurality of physical devices. For example, the physical server includes physical devices such as a processor and a storage. A plurality of virtual instances may be deployed on one host, and the plurality of virtual instances deployed on a same host share a physical resource of the host. Based on different usage conditions, a plurality of virtual instances deployed on one host optionally belong to the same user or different users.

A resource pool is a set of various hardware resources and software resources in a cloud computing data center. Generally, based on resource types, resources in the resource pool may be classified into compute resources, storage resources, network resources, and the like.

Virtualization (virtualization) is a resource management technology. Virtualization (virtualization) can abstract and convert various physical resources of a host, such as compute resources, network resources, and storage resources, and present processed resources. This breaks an indivisibility barrier between physical structures of the host, allowing a user to use these resources in a better manner than an original configuration. Resources obtained through virtualization are referred to as virtual resources. The virtual resources are not limited by a setup mode, a setting region, or a physical configuration of existing physical resources.

A virtual instance runs on an operating system of the host, and the virtual instance is provided with an operating system. The operating system of the virtual instance runs an application program, and the application program is configured to implement a service of a user. The virtual instance may use a hardware resource of the host, and different virtual instances are isolated from each other. Generally, the virtual instance may be a virtual machine, a container, an independent process, or the like.

A virtual machine (virtual machine, VM) is a complete computer system that is simulated by using the virtualization technology, that has complete hardware system functions, and that runs in an entirely isolated environment. Some instruction subsets of the virtual machine can be processed in a host (host) machine, and other instructions can be executed through emulation. The virtual machine is also referred to as a virtual server. The virtual machine may be considered as a set of a plurality of virtual devices, and the set of the plurality of virtual devices has a complete hardware system function and runs in an entirely isolated environment. A virtual device is obtained through virtualization by using the virtualization technology and based on a physical device that can share resources. For example, based on the virtualization technology, a virtual processor obtained through virtualization based on a processor is a virtual device. For another example, based on the virtualization technology, a training card obtained through virtualization based on a field-programmable gate array (field-programmable gate array, FPGA) is also a virtual device. For example, the virtual machine in this application may be a kernel-based virtual machine (kernel-based virtual machine, KVM).

A container provides a lightweight virtual running environment. The container may be obtained by packaging all code, libraries, and dependencies of an application program of a user into an image. When being executed, the image runs in the virtual running environment. In this case, the container is a runtime instance of the image, and is similar to a lightweight sandbox and can be launched, started, stopped, and deleted. The image does not share resources such as a memory, a processor (for example, a central processing unit (central processing unit, CPU)), or a disk of the host machine with another image. This implements container isolation between the image and the host and between the image and the another image, to ensure that a process in the container cannot be used for monitoring any process or resource outside the container.

Direct memory access (direct memory access, DMA) may also be referred to as a direct memory operation or a block data transmission mode, and is a data interaction mode in which data is directly accessed from a memory of a computer without passing through a central processing unit (central processing unit, CPU) of the computer. During data transmission in the DMA mode, the CPU of the computer delivers instructions to a DMA controller, to instruct the DMA controller to control data transmission. After completing data transmission, the DMA controller feeds back transmission completion information to the CPU. It can be learned that, during DMA data transmission, the CPU of the computer does not need to perform a transmission operation, and operations such as obtaining the instructions, obtaining data, and sending data by the CPU of the computer can be omitted, to reduce resource occupation of the CPU of the computer, and saving system resources.

DMA may include remote DMA (remote direct memory access, RDMA) and local DMA. RDMA is a data transmission mode in which data is directly transmitted from a memory of a computer to another computer through a network without intervention of operating systems of the two computers. Local DMA is a data transmission mode that does not need to be implemented through a network.

A memory (memory) is also referred to as an internal memory or a main memory, and a function of the memory is to temporarily store data needed for CPU computing and data that needs to be exchanged between the CPU and an external storage such as a hard disk drive.

In the field of cloud service technologies, a cloud service system usually provides a cloud service for a user by running a virtual instance. During running of the virtual instance, the cloud service system usually backs up memory data needed for running the virtual instance, so that when hardware on which the virtual instance depends fails, a cloud service can continue to be provided for the user based on backed-up memory data.

A hot standby (also referred to as fault tolerance) technology is a commonly used technology for data backup. The hot standby technology can be used to perform real-time backup on application data through various means. When a hardware failure occurs, services can continue to be provided by using backed-up application data, to ensure uninterrupted services and zero data losses or a minimal data loss. Currently, three methods are mainly used to implement hot standby. A first method is a fault tolerance method based on hardware redundancy. In the method, real-time backup of service data is performed by using dedicated hardware. However, due to high costs of the method, the method is difficult to promote. A second method is a fault tolerance method based on an application program. In the method, the application program identifies a data structure and state information of service data, and backs up the data. This fault tolerance method based on the application program has advantages of a mature technology implementation and good performance. However, this fault tolerance method is closely coupled with application programs. Generally, only key data can be backed up, and uninterrupted services cannot be ensured. A third method is a fault tolerance method based on a virtualization technology. When a service is provided by running a virtual machine, in the method, real-time backup of a full state of the virtual machine is performed at a virtualization layer, to achieve an objective of hot standby. The method is a primary focus in this application.

Currently, when memory data needed for running a virtual instance on a first host is backed up to a second host by using the hot standby technology, checkpoint (checkpoint) events are usually periodically initiated, to periodically send the memory data to the second host, so as to achieve an objective of backing up the memory data.

However, because the checkpoint events are periodically initiated, a manner of backing up the memory data based on the checkpoint event results in hysteresis, affecting performance of services provided based on backed-up memory data. For example, when a host running on a virtual machine fails, if execution time of a next checkpoint event is not reached, data generated between two checkpoint events is lost. In this case, services can only continue to be provided based on data backed up in a previous checkpoint event. Therefore, performance of services is affected. In addition, the virtual machine needs to be paused during checkpoint state synchronization to back up processor, memory, and input/output (I/O) data, causing short-term impact on the services. Although the duration is usually less than 100 millimeters (ms), the impact cannot be ignored due to periodic execution of the checkpoint events. In addition, the first host usually sends the memory data to the second host by using a transmission control protocol (transmission control protocol, TCP) or an internet protocol (internet protocol, IP). However, due to poor network stability, a packet loss and congestion may occur during data transmission. Even when retransmission is performed, real-time synchronization latency is caused.

Based on this, embodiments of this application provide a cloud service providing method. The method is applied to a cloud service system. The cloud service system is configured to provide a cloud service based on a virtual instance. The cloud service system includes a first host and a second host. A first shared memory is configured between the first host and the second host. Both the first host and the second host can obtain data in the first shared memory. The method includes: The first host runs an active virtual instance, where the active virtual instance is used for providing a cloud service for a user; the second host runs a first standby virtual instance; the first host stores, in the first shared memory during running of the active virtual instance, memory data needed for running the active virtual instance; and the second host runs, when the first host fails, the first standby virtual instance based on the memory data obtained from the first shared memory, to cause the first standby virtual instance to provide a cloud service for the user.

In this way, hot standby of memory data can be implemented between the first host and the second host through a shared memory. In comparison with a current manner of backing up data based on checkpoint events or another current manner, this manner effectively reduces memory access latency of memory data, improves timeliness and efficiency of hot standby of the memory data, provides a real-time redundancy backup capability, and helps ensure performance of services provided based on backed-up memory data.

This specification describes the technical solutions of this application in detail from a plurality of perspectives such as an implementation scenario, a method procedure, a hardware apparatus, and a software apparatus.

The following first describes an application scenario of embodiments of this application by using an example.

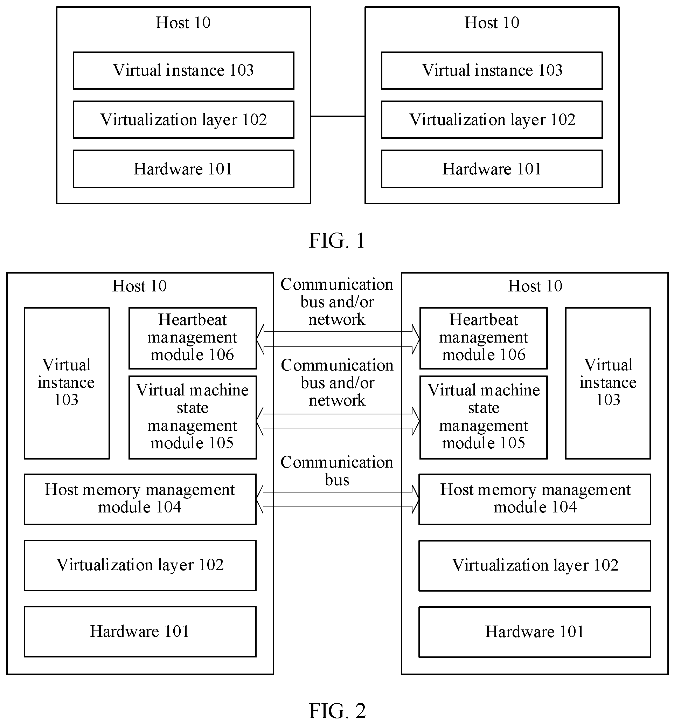

FIG. 1 is a diagram of a structure of an implementation scenario related to a cloud service providing method according to an embodiment of this application. As shown in FIG. 1, the implementation scenario includes at least two hosts 10. Each host 10 includes hardware 101, a virtualization layer 102, and a virtual instance 103. A communication connection can be established between different hosts 10. For example, a communication connection may be established between a first host 10 and a second host 10 through a communication bus and/or a network. Optionally, the network may be a local area network, an internet, or another network. This is not limited in embodiments of this application.

In an implementation, the cloud service providing method provided in this embodiment of this application may be implemented by running an executable program on the host 10. For example, the executable program for the cloud service providing method may be presented in a form of an application program installation package. After the application program installation package is installed on the host 10, the cloud service providing method can be implemented by running the executable program.

Optionally, the host 10 may be an independent server, or a server cluster including a plurality of servers, or a server in a cloud computing service center. A large quantity of basic resources owned by a cloud service provider are deployed in the cloud computing service center. For example, compute resources, storage resources, and network resources are deployed in the cloud computing service center. The cloud computing service center may implement, by using the large quantity of basic resources, the cloud service providing method provided in embodiments of this application.

When the host 10 is a server in the cloud computing service center, a user may access a cloud platform through a client, and the host 10 indicates the cloud platform to provide a cloud service for the user. In this case, the host 10 may create the virtual instance 103 on the host 10 based on the indication of the cloud platform, and provide a cloud service for the user by running the virtual instance 103. In addition, the user optionally indicates the cloud platform to provide an additional service with a redundancy backup function for the cloud service. In this case, when providing the cloud service for the user, the host 10 can further run the cloud service providing method provided in this embodiment of this application, to provide, for the user, an additional service for performing redundancy backup on data. After the user purchases the additional service on the cloud platform, the cloud platform can provide the additional service for the user by using resources of the cloud computing service center and the cloud service providing method provided in this embodiment of this application.

It should be noted that the data backup function may be provided as an additional service or an independent cloud service. In addition, the cloud platform may be a cloud platform of a central cloud, a cloud platform of an edge cloud, or a cloud platform including a central cloud and an edge cloud. This is not specifically limited in this embodiment of this application. In addition, in the implementation scenario shown in FIG. 1, the host 10 may alternatively be implemented through another resource platform other than the cloud platform. This is not specifically limited in this embodiment of this application.

In an implementation, the cloud service providing method provided in this embodiment of this application can be implemented through cooperation of a plurality of functional modules. For example, as shown in FIG. 2, the host 10 further includes a host memory management module 104, a virtual machine state management module 105, and a heartbeat management module 106. The host memory management module 104 is deeply combined with a high-speed communication bus, and is configured to map a memory of another host to a local host in real time or in advance. The virtual machine state management module 105 is configured to manage a real-time state of a virtual machine that needs to perform hot standby on data. Optionally, the state may include, but is not limited to, a CPU state, a GPU state, memory/graphics memory data, disk I/O, network I/O, and the like. The heartbeat management module 106 is configured to determine connectivity between an active virtual machine and a standby virtual machine and trigger active-standby switchover. For example, as shown in FIG. 2, a communication connection is established between host memory management modules 104 of different hosts 10 through a communication bus, a communication connection is established between virtual machine state management modules 105 of different hosts 10 through a communication bus and/or a network, and a communication connection is established between heartbeat management modules 106 of different hosts 10 through a communication bus and/or a network. The network optionally uses a TCP protocol/an IP protocol, and the communication bus is optionally a communication bus that supports memory synchronization access semantics. For example, the communication bus is optionally a high-speed communication bus such as a compute express link (compute express link, CXL) or a Lingqu bus (also referred to as a UB bus).

It should be understood that the foregoing content is an illustration of an implementation scenario of the cloud service providing method provided in embodiments of this application, and does not constitute a limitation on the implementation scenario of the cloud service providing method. A person of ordinary skill in the art may learn that, as a service requirement changes, the implementation scenario of the cloud service providing method may be adjusted based on an application requirement. Examples are not listed one by one in embodiments of this application.

The following describes the cloud service providing method provided in embodiments of this application. In embodiments of this application, there are a plurality of configuration manners for a shared memory. The following uses two configuration manners as examples for description. In a first configuration manner, each of a plurality of hosts that use a shared memory is configured with a physical memory, and a host configured to back up data is configured with a virtual memory. The host configured to back up data can obtain, through the virtual memory, memory data stored in a physical memory of another host. In a second configuration manner, a plurality of hosts share a physical memory configured on a same host. After memory data in the physical memory is updated, the plurality of hosts can all obtain updated memory data from the physical memory.

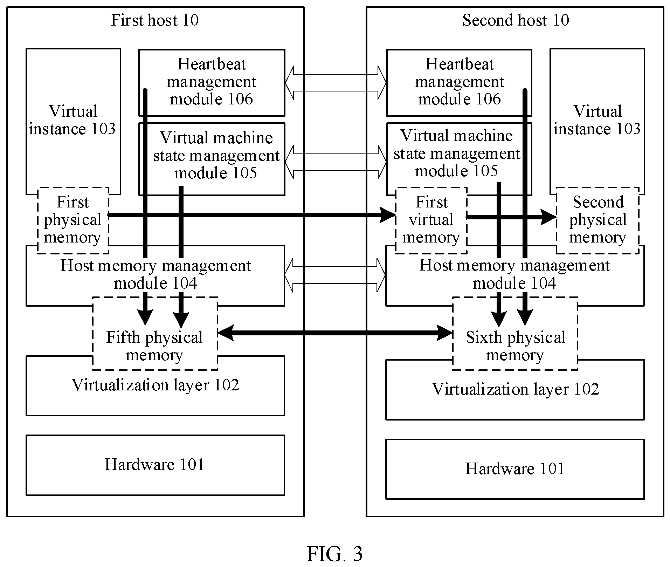

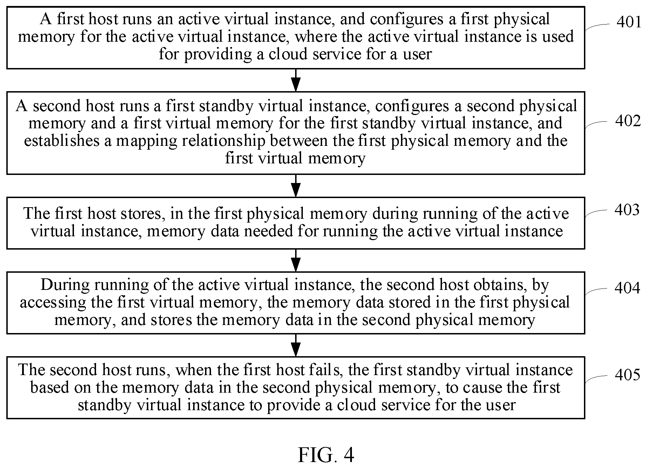

The following first describes a cloud service providing method in the first configuration manner. As shown in FIG. 3, in the first configuration manner, a cloud service system includes a first host and a second host. The first host is configured with a first physical memory. The second host is configured with a first virtual memory and a second physical memory, and a mapping relationship is established between the first physical memory and the first virtual memory. The implementation may be considered as implementing a function of the shared memory based on the first physical memory, the second physical memory, the first virtual memory, and the relationship between the first physical memory and the first virtual memory. As shown in FIG. 4, the cloud service providing method in the first configuration manner includes the following steps.

Step 401: The first host runs an active virtual instance, and configures the first physical memory for the active virtual instance, where the active virtual instance is used for providing a cloud service for a user.

After the first host is powered on, the first host can create the active virtual instance on the first host, to provide the cloud service for the user by using the active virtual instance. In addition, the first host allocates a local first physical memory to the active virtual instance, so that the active virtual instance runs based on the first physical memory. The active virtual instance has read and write access permission to the first physical memory. Optionally, the virtual instance may be a virtual machine, a container, or the like.

In an implementation, after creating the active virtual instance on the first host, the first host optionally sends a notification to the second host, to indicate the second host to create a first standby virtual instance for the active virtual instance, so that when the active virtual instance fails, the first standby virtual instance is used for replacing the active virtual instance to provide a cloud service for the user. Optionally, the notification may be sent through a network. For example, the first host sends the notification to the second host by using a TCP protocol/an IP protocol. Additionally/Alternatively, the notification is transferred through a communication bus that supports memory synchronization access semantics. For example, the communication bus may be a high-speed communication bus such as a CXL or a UB. When a plurality of hosts are connected to each other through the communication bus, synchronous memory access of the plurality of hosts is supported. For example, as shown in FIG. 3, the first host is configured with a fifth physical memory, and a CXL bus is connected between a processor of the first host and a processor of the second host. After the first host creates the active virtual instance on the first host, the processor of the first host stores the notification in the fifth physical memory, so that the processor of the second host obtains the notification from the fifth physical memory through the high-speed communication bus, to transfer the notification from the first host to the second host. Optionally, the fifth physical memory is obtained by initializing a virtualization layer. In addition, the notification may further indicate a type and a used resource specification of the active virtual instance, so that the second host creates the first standby virtual instance based on the type and the resource specification. Further, the notification may further indicate information such as a capacity of the first physical memory and a granularity (for example, a size of a data page) at which the first physical memory manages data, so that the second host establishes the mapping relationship between the first physical memory and the first virtual memory based on the information.

When functions of the first host are implemented by using the functional modules, the operation that the first host allocates the local first physical memory to the active virtual instance is optionally performed by a host memory management module of the first host. The operation that the processor of the first host stores the notification in the fifth physical memory is optionally performed by a virtual machine state management module of the first host.

Step 402: The second host runs the first standby virtual instance, configures the second physical memory and the first virtual memory for the first standby virtual instance, and establishes the mapping relationship between the first physical memory and the first virtual memory.

After the second host is powered on, the second host can create the first standby virtual instance on the second host, so that when the active virtual instance fails, the first standby virtual instance is used for replacing the active virtual instance to provide the cloud service for the user. In addition, the second host allocates a local second physical memory to the first standby virtual instance, so that the first standby virtual instance runs based on the physical memory. The first standby virtual instance has read and write access permission to the second physical memory. Optionally, a type and a used resource specification of the first standby virtual instance may be the same as those of the active virtual instance. For example, when the active virtual instance is a virtual machine, and the active virtual instance uses four processor cores and a memory of 64 gigabytes (GB), the first standby virtual instance is also a virtual machine, and the first standby virtual instance also uses four processor cores and a memory of 64 GB.

In addition, to help the second host back up memory data needed for running the active virtual instance, the second host further needs to configure the first virtual memory for the first standby virtual instance, and establish the mapping relationship between the first virtual memory and the first physical memory. The first standby virtual instance has read access permission to the first virtual memory. In an implementation, the mapping relationship may be considered as a correspondence between a virtual address in the first virtual memory and a physical address in the first physical memory. From a perspective of the second host, when the second host accesses a virtual address in the first virtual memory, the processor of the second host can map the virtual address to a physical address in the first physical memory based on the mapping relationship, to achieve an objective of accessing the first physical memory through the first virtual memory. In an implementation, the communication bus that supports memory synchronization access semantics is connected between the processor of the first host and the processor of the second host, and the communication bus provides physical support for accessing the first physical memory through the first virtual memory.

In an implementation, the operation that the second host creates the first standby virtual instance on the second host may be optionally triggered based on the notification of the first host. For example, after receiving the notification that the first host indicates to create the first standby virtual instance, the second host creates the first standby virtual instance on the second host. Optionally, the notification may be sent through the network. For example, the first host sends the notification to the second host by using the TCP protocol/IP protocol. Additionally/Alternatively, the notification is transferred through the communication bus that supports memory synchronization access semantics. For example, the first host is configured with the fifth physical memory, and the CXL bus is connected between the processor of the first host and the processor of the second host. After the processor of the first host stores the notification in the fifth physical memory, the processor of the second host can obtain the notification from the fifth physical memory through the CXL bus, and create the first standby virtual instance based on the notification. The type and the used resource specification of the active virtual instance are optionally provided by the first host for the second host based on the notification. Similarly, the operations that the second host configures the first virtual memory and establishes the mapping relationship between the first virtual memory and the first physical memory are optionally triggered based on the notification of the first host. For example, after receiving the notification that the first host indicates to create the first standby virtual instance, the second host configures the first virtual memory and establishes the mapping relationship based on the notification. For another example, when the notification of the first host carries information such as a capacity of the first physical memory and a granularity (for example, a size of a data page) at which the first physical memory manages data, the second host configures capacities of the second physical memory and the first virtual memory based on the capacity, and configures the first virtual memory and establishes the mapping relationship between the first physical memory and the first virtual memory based on the information such as the capacity and the granularity.

When functions of the second host are implemented by using the functional modules, the operations that the second host allocates the second physical memory and the first virtual memory to the first standby virtual instance, and establishes the mapping relationship are optionally performed by a host memory management module of the second host. The operation that the processor of the second host obtains the notification from the fifth physical memory through the high-speed communication bus is optionally performed by a virtual machine state management module of the second host.

It should be noted that, as shown in FIG. 3, the second host is optionally configured with a sixth physical memory, and the sixth physical memory is optionally obtained by initializing a virtualization layer. When the second host needs to send a notification to the first host, the processor of the second host may store the notification in the sixth physical memory, so that the processor of the first host can obtain the notification from the sixth physical memory through the high-speed communication bus. When the functions of the first host and the functions of the second host are implemented by using the functional modules, the operation that the processor of the first host obtains the notification from the sixth physical memory through the high-speed communication bus is optionally performed by the virtual machine state management module of the first host, and the operation that the processor of the second host stores the notification in the sixth physical memory is optionally performed by the virtual machine state management module of the second host.

When the notification is transferred through the communication bus that supports memory synchronization access semantics, because the communication bus supports a direct connection between the processors of the hosts, in comparison with a manner of transferring through a network such as a TCP network/an IP network, there is no possibility of a packet loss or congestion failure point introduced by a conventional network device such as a switch or a router. In addition, because the transfer manner supports memory synchronization access semantics, transferring a message through the communication bus achieves lower memory access latency and higher bandwidth. When information such as memory data that needs to be synchronized is transferred between the hosts through the communication bus, an effect similar to inter-process communication can be achieved, to greatly reduce synchronization overheads, greatly improve communication performance, and greatly improve reliability of connections between the hosts. In addition, because bandwidth for transferring the notification is independent, resource contention between tenants does not occur. In addition, when the notification is transferred through the network and the communication bus, two planes can be established between the first host and the second host in the two manners, to enhance connectivity between the first host and the second host and increase a probability of successful notification transfer between the two hosts.

Step 403: The first host stores, in the first physical memory during running of the active virtual instance, the memory data needed for running the active virtual instance.

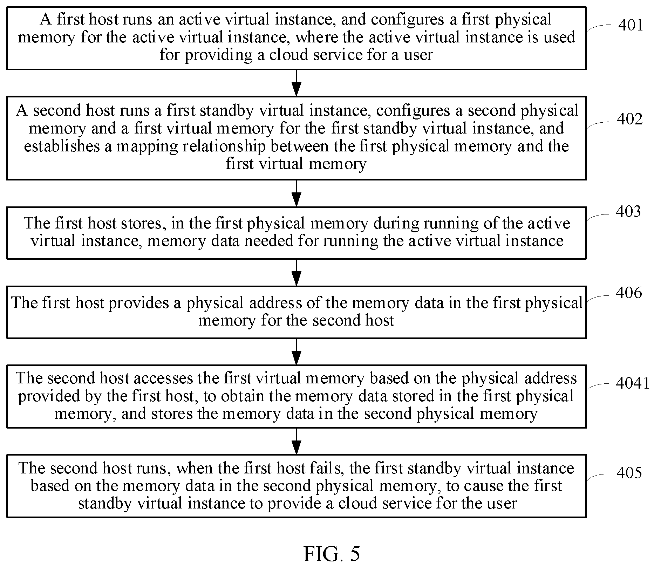

The first physical memory is a memory needed for running the active virtual instance. All data needed for running the active virtual instance is stored in the first physical memory. In this embodiment of this application, because the second host needs to back up the memory data needed for running the active virtual instance, as shown in FIG. 5, after the first host stores the memory data in the first physical memory, the cloud service providing method further includes step 406: The first host provides a physical address of the memory data in the first physical memory for the second host, to cause the second host to obtain the memory data based on the physical address. For example, during running of the active virtual machine, memory data is managed based on memory pages. For example, each memory page records data of 2 megabytes (MB), 4 kilobytes (KB), or another capacity (for example, 64 bytes (Bytes)). Each time the first host stores memory data in a memory page of the first physical memory, the first host provides a physical address of the memory page for the second host. Optionally, the physical address is provided through the communication bus that supports memory synchronization access semantics, and/or the physical address is provided through the network. For a manner of providing the physical address, correspondingly refer to the implementation in which the first host transfers the notification to the second host in step 401 and step 402. Details are not described herein again.

When the functions of the first host are implemented by using the functional modules, the operation that the first host provides the physical address for the second host is optionally performed by the virtual machine state management module of the first host.

Step 404: During running of the active virtual instance, the second host obtains, by accessing the first virtual memory, the memory data stored in the first physical memory, and stores the memory data in the second physical memory.

Because the mapping relationship is established between the first physical memory and the first virtual memory, the second host can obtain, by accessing the first virtual memory and based on the mapping relationship, the memory data stored in the first physical memory. In an implementation, the communication bus that supports memory synchronization access semantics is connected between the processor of the first host and the processor of the second host. The processor of the second host can access the first physical memory through the communication bus, and obtain the memory data from the first physical memory. After obtaining the memory data needed for running the active virtual instance, the second host needs to store the memory data in the second physical memory for subsequent use. Due to the mapping relationship established between the first physical memory and the first virtual memory, from a perspective of the second host, when the second host accesses a virtual address in the first virtual memory, the processor of the second host can map the virtual address to a physical address in the first physical memory based on the mapping relationship, and read data from the physical address, to obtain the memory data.

When the first host provides the physical address of the memory data in the first physical memory for the second host, as shown in FIG. 5, an implementation process of step 404 includes step 4041: The second host accesses the first virtual memory based on the physical address provided by the first host, to obtain the memory data stored in the first physical memory, and stores the memory data in the second physical memory. In an implementation, after obtaining the physical address of the memory data in the first physical memory, the second host optionally accesses the first virtual memory based on the physical address, and store, in the second physical memory by using a hardware DMA capability or in a direct memory copy manner, data obtained by accessing the first virtual memory, to achieve an objective of backing up the memory data in the second host in real time.

When the functions of the second host are implemented by using the functional modules, the operation that the second host obtains, by accessing the first virtual memory, the memory data stored in the first physical memory is optionally performed by the virtual machine state management module of the second host.

Step 405: The second host runs, when the first host fails, the first standby virtual instance based on the memory data in the second physical memory, to cause the first standby virtual instance to provide the cloud service for the user.

When the first host fails, the second host may run the first standby virtual instance based on the memory data that is needed for running the active virtual instance and that is backed up by the second host, so that the first standby virtual instance is used for replacing the active virtual instance to provide the cloud service for the user. Because the first host is connected to the second host through the communication bus, when the second host cannot obtain data from the first host through the communication bus, the second host determines that the first host fails. When the first host is connected to the second host through both the communication bus and the network, and the second host cannot obtain data from the first host through one of the communication bus and the network, the second host optionally continues to obtain data from the first host through the other of the communication bus and the network. If the second host cannot obtain data from the first host through the other of the communication bus and the network, the second host determines that the first host fails.

When the functions of the second host are implemented by using the functional modules, the operation that the second host determines that the first host fails is optionally performed by a heartbeat management module of the second host. For example, the heartbeat management module of the second host can periodically interact with the first host, for example, transmit data through the communication bus and/or the network. When the heartbeat management module cannot interact with the first host, the heartbeat management module determines that the first host fails.

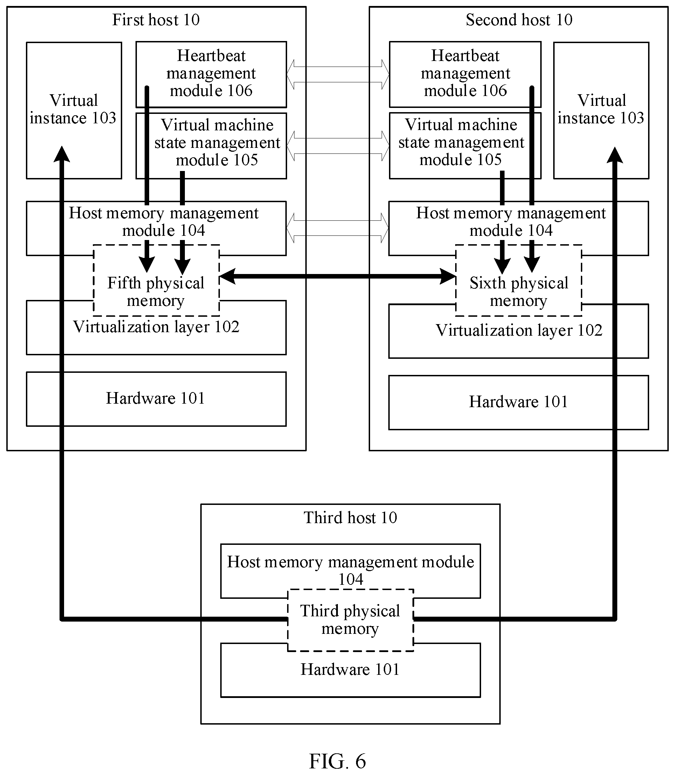

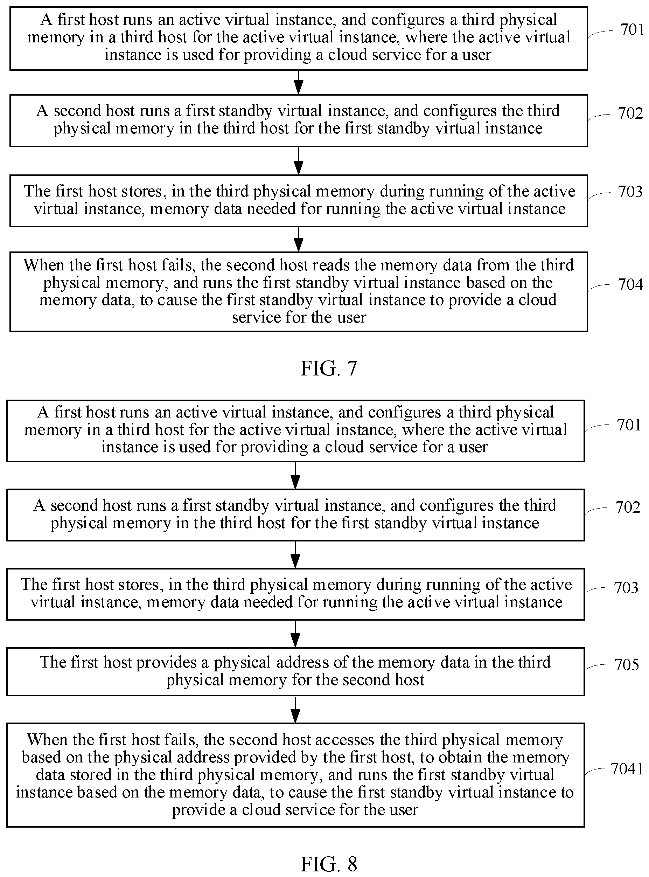

The following describes a cloud service providing method in the second configuration manner. As shown in FIG. 6, in the second configuration manner, a cloud service system includes a first host 10, a second host 10, and a third host 10. The third host 10 is configured with a third physical memory. Both the first host 10 and the second host 10 can obtain data stored in the third physical memory. The implementation may be considered as that the first host 10 and the second host 10 share the third physical memory to implement a function of a shared memory. As shown in FIG. 7, the cloud service providing method in the second configuration manner includes the following steps.

Step 701: The first host runs an active virtual instance, and configures the third physical memory in the third host for the active virtual instance, where the active virtual instance is used for providing a cloud service for a user.

After the first host is powered on, the first host can create the active virtual instance on the first host, to provide the cloud service for the user by using the active virtual instance. In addition, the first host allocates the third physical memory in the third host to the active virtual instance, so that the active virtual instance runs based on the third physical memory. The active virtual instance has read and write access permission to the third physical memory. To ensure a data read/write speed, a communication bus that supports memory synchronization access semantics is connected between the first host and the third host, and the active virtual instance performs a read/write operation on the third physical memory through the communication bus. The third host is optionally any host that can provide a memory. For example, the third host is a memory node, or the third host is a host in a memory resource pool. Optionally, the virtual instance may be a virtual machine, a container, or the like.

In an implementation, after creating the active virtual instance on the first host, the first host optionally sends a notification to the second host, to indicate the second host to create a first standby virtual instance for the active virtual instance, so that when the active virtual instance fails, the first standby virtual instance is used for replacing the active virtual instance to provide a cloud service for the user. Optionally, the notification may be sent through a network. For example, the first host sends the notification to the second host by using a TCP protocol/an IP protocol. Additionally/Alternatively, the notification is transferred through the communication bus that supports memory synchronization access semantics. For example, the communication bus may be a high-speed communication bus such as a CXL or a UB. When a plurality of hosts are connected to each other through the communication bus, synchronous memory access of the plurality of hosts is supported. For example, as shown in FIG. 6, the first host is configured with a fifth physical memory, and a CXL bus is connected between a processor of the first host and a processor of the second host. After the first host creates the active virtual instance on the first host, the processor of the first host stores the notification in the fifth physical memory, so that the processor of the second host obtains the notification from the fifth physical memory through the CXL bus, to transfer the notification from the first host to the second host. Optionally, the fifth physical memory is obtained by initializing a virtualization layer. In addition, the notification may further indicate a type and a used resource specification of the active virtual instance, so that the second host creates the first standby virtual instance based on the type and the resource specification.

When functions of the first host and the third host are implemented by using functional modules, the operation that the first host allocates the third physical memory to the active virtual instance is optionally implemented through interaction between a host memory management module of the first host and a host memory management module of the third host. The operation that the processor of the first host stores the notification in the fifth physical memory is optionally performed by a virtual machine state management module of the first host.

Step 702: The second host runs the first standby virtual instance, and configures the third physical memory in the third host for the first standby virtual instance.

After the second host is powered on, the second host can create the first standby virtual instance on the second host, so that when the active virtual instance fails, the first standby virtual instance is used for replacing the active virtual instance to provide the cloud service for the user. In addition, the second host allocates the third physical memory in the third host to the first standby virtual instance, so that the first standby virtual instance runs based on the third physical memory. The first standby virtual instance has read and write access permission to the third physical memory. To ensure a data read/write speed, a communication bus that supports memory synchronization access semantics is connected between the second host and the third host, and the first standby virtual instance performs a read/write operation on the third physical memory through the communication bus. Optionally, a type and a used resource specification of the first standby virtual instance may be the same as those of the active virtual instance. For example, when the active virtual instance is a virtual machine, and the active virtual instance uses four processor cores and a memory of 64 gigabytes (GB), the first standby virtual instance is also a virtual machine, and the first standby virtual instance also uses four processor cores and a memory of 64 GB.

In an implementation, the operation that the second host creates the first standby virtual instance on the second host may be optionally triggered based on the notification of the first host. For example, after receiving the notification that the first host indicates to create the first standby virtual instance, the second host creates the first standby virtual instance on the second host. Optionally, the notification may be sent through the network. For example, the first host sends the notification to the second host by using the TCP protocol/IP protocol. Additionally/Alternatively, the notification is transferred through the communication bus that supports memory synchronization access semantics. For example, the first host is configured with the fifth physical memory, and a high-speed communication bus is connected between the processor of the first host and the processor of the second host. After the processor of the first host stores the notification in the fifth physical memory, the processor of the second host can obtain the notification from the fifth physical memory through the high-speed communication bus, and create the first standby virtual instance based on the notification. The type and the used resource specification of the active virtual instance are optionally provided by the first host for the second host based on the notification.

When the functions of the second host are implemented by using the functional modules, the operation that the second host allocates the third physical memory to the first standby virtual instance is optionally performed by a host memory management module of the second host. The operation that the processor of the second host obtains the notification from the fifth physical memory through the high-speed communication bus is optionally performed by a virtual machine state management module of the second host.

It should be noted that the second host is optionally configured with a sixth physical memory, and the sixth physical memory is optionally obtained by initializing a virtualization layer. When the second host needs to send a notification to another host (for example, the first host), the processor of the second host may store the notification in the sixth physical memory, so that the processor of the another host can obtain the notification from the sixth physical memory through the high-speed communication bus. When the functions of the first host and the functions of the second host are implemented by using the functional modules, the operation that the processor of the first host obtains the notification from the sixth physical memory through the high-speed communication bus is optionally performed by the virtual machine state management module of the first host, and the operation that the processor of the second host stores the notification in the sixth physical memory is optionally performed by the virtual machine state management module of the second host.

When the notification is transferred through the communication bus that supports memory synchronization access semantics, because the communication bus supports a direct connection between the processors of the hosts, in comparison with a manner of transferring through a network such as a TCP network/an IP network, there is no possibility of a packet loss or congestion failure point introduced by a conventional network device such as a switch or a router. In addition, because the transfer manner supports memory synchronization access semantics, transferring a message through the communication bus achieves lower memory access latency and higher bandwidth. When information such as memory data that needs to be synchronized is transferred between the hosts through the communication bus, an effect similar to inter-process communication can be achieved, to greatly reduce synchronization overheads, greatly improve communication performance, and greatly improve reliability of connections between the hosts. In addition, because bandwidth for transferring the notification is independent, resource contention between tenants does not occur. In addition, when the notification is transferred through the network and the communication bus, two planes can be established between the first host and the second host in the two manners, to enhance connectivity between the first host and the second host and increase a probability of successful notification transfer between the two hosts.

Step 703: The first host stores, in the third physical memory during running of the active virtual instance, the memory data needed for running the active virtual instance.

The third physical memory is a physical memory that is in the third host and that is allocated by the first host to the active virtual instance. During running of the active virtual instance, all memory data needed for running the active virtual instance is stored in the third physical memory. In this embodiment of this application, because the second host needs to back up the memory data needed for running the active virtual instance, as shown in FIG. 8, after the first host stores the memory data in the third physical memory, the cloud service providing method further includes step 705: The first host provides a physical address of the memory data in the third physical memory for the second host, to cause the second host to obtain the memory data based on the physical address. For example, during running of the active virtual machine, memory data is managed based on memory pages. For example, each memory page records data of 2 megabytes (MB), 4 kilobytes (KB), or another capacity (for example, 64 bytes (Bytes)). Each time the first host stores memory data in a memory page of the third physical memory, the first host provides a physical address of the memory page for the second host. Optionally, the physical address is provided through the communication bus that supports memory synchronization access semantics, and/or the physical address is provided through the network. For a manner of providing the physical address, correspondingly refer to the implementation in which the first host sends the notification to the second host in step 401 and step 402. Details are not described herein again.

When the functions of the first host are implemented by using the functional modules, the operation that the first host provides the physical address for the second host is optionally performed by the virtual machine state management module of the first host.

Step 704: When the first host fails, the second host reads the memory data from the third physical memory, and runs the first standby virtual instance based on the memory data, to cause the first standby virtual instance to provide a cloud service for the user.

Because the third physical memory is a memory allocated to the first standby virtual instance, when the first host fails, the second host can obtain the memory data from the third physical memory, and run the first standby virtual instance based on the memory data, so that the first standby virtual instance is used for replacing the active virtual instance to provide the cloud service for the user. When the first host provides the physical address of the memory data in the third physical memory for the second host, as shown in FIG. 8, an implementation process of step 704 includes step 7041: When the first host fails, the second host accesses the third physical memory based on the physical address provided by the first host, to obtain the memory data stored in the third physical memory, and runs the first standby virtual instance based on the memory data, to cause the first standby virtual instance to provide the cloud service for the user.

It can be learned from the foregoing that, in the second configuration manner of the shared memory, because the first host and the second host jointly use the third physical memory, when the first host fails, the second host can smoothly access the third physical memory, so that more flexible active-standby switchover can be implemented, and the first standby virtual instance can be launched more quickly. In addition, the second host can directly use the memory data in the third physical memory, so that the memory data does not need to be backed up, and an amount of data that needs hot standby can be greatly reduced.

Because the first host is connected to the second host through the communication bus, when the second host cannot obtain data from the first host through the communication bus, the second host determines that the first host fails. When the first host is connected to the second host through both the communication bus and the network, and the second host cannot obtain data from the first host through one of the communication bus and the network, the second host optionally continues to obtain data from the first host through the other of the communication bus and the network. If the second host cannot obtain data from the first host through the other of the communication bus and the network, the second host determines that the first host fails.

When the functions of the second host are implemented by using the functional modules, the operation that the second host determines that the first host fails is optionally performed by a heartbeat management module of the second host. For example, the heartbeat management module of the second host can periodically interact with the first host, for example, transmit data through the communication bus and/or the network. When the heartbeat management module cannot interact with the first host, the heartbeat management module determines that the first host fails.

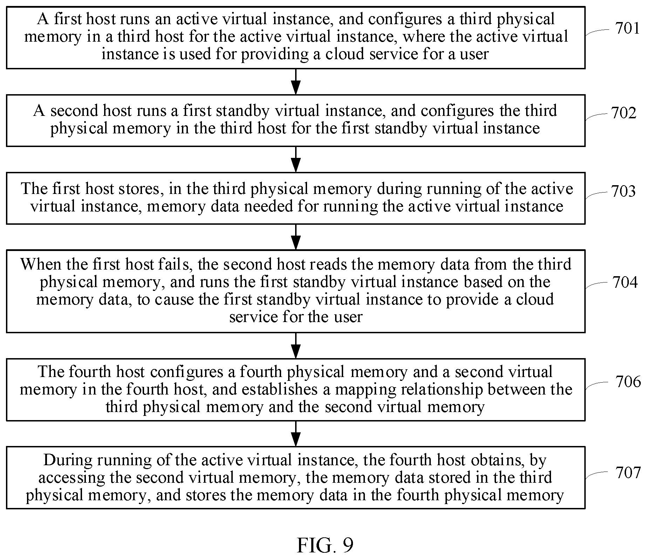

Optionally, to provide stable active-standby redundancy for the active virtual instance, a standby host may be further created for the third host, to back up the memory data in the third physical memory. By analogy, in the cloud service providing method, each of hosts that have different functions is provided with a standby host, so that when any host subsequently fails, functions of the host can be implemented by the standby host. For example, a physical memory of a standby host for the third host is used as a shared memory of the first host and the second host when the third host fails, to ensure active-standby redundancy of a virtual instance used for implementing a user cloud service. In an implementation, the cloud service system further includes a fourth host. The fourth host is configured with a second virtual memory and a fourth physical memory, and a mapping relationship is established between the third physical memory and the second virtual memory. As shown in FIG. 9, the method further includes the following steps.

Step 706: The fourth host configures the fourth physical memory and the second virtual memory in the fourth host, and establishes the mapping relationship between the third physical memory and the second virtual memory.

For an implementation process of step 706, refer to an implementation process of step 402. Details are not described herein again.

Step 707: During running of the active virtual instance, the fourth host obtains, by accessing the second virtual memory, the memory data stored in the third physical memory, and stores the memory data in the fourth physical memory.

For an implementation process of step 707, refer to the implementation process of step 404. Details are not described herein again. In addition, after storing the memory data in the third physical memory, the first host may also provide the physical address of the memory data in the third physical memory for the fourth host. Correspondingly, the second host accesses the second virtual memory based on the physical address provided by the first host, to obtain the memory data stored in the third physical memory. The physical address may be provided through a communication bus that supports memory synchronization access semantics, and/or through a network. For an implementation process, refer to related descriptions in step 703 and step 704. Details are not described herein again.

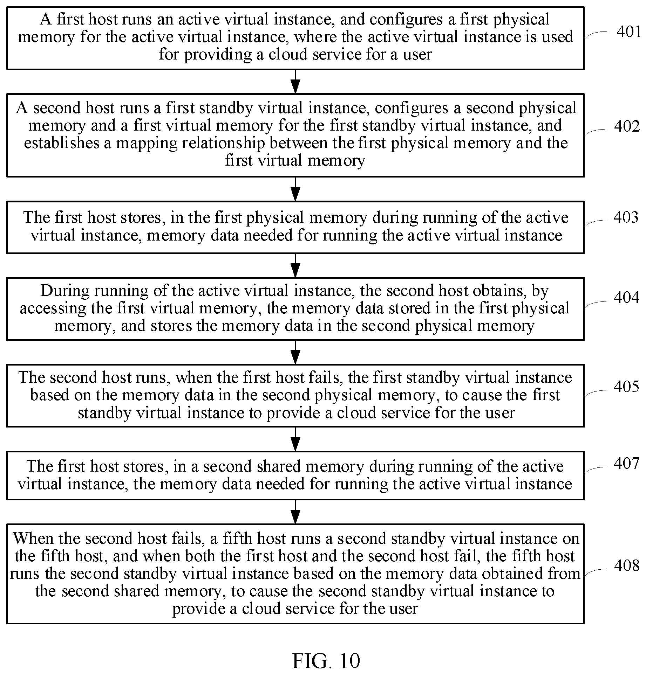

Further, to provide stable active-standby redundancy for the active virtual instance, when the first host or the second host fails, one host that does not fail and that is in the first host and the second host may send a notification to the other host, to indicate the other host to create a standby virtual instance, and back up, to the other host, memory data needed for running the standby virtual instance, so that when both the first host and the second host fail, the standby virtual instance is used for replacing the active virtual instance and the first standby virtual instance to provide a cloud service for the user. By analogy, in the cloud service providing method, when one host fails, a standby virtual instance is launched on the other host, to ensure that virtual instances for implementing a same service are simultaneously launched on at least two hosts. This ensures active-standby redundancy of the virtual instances used for implementing a user cloud service. In an implementation, the cloud service system further includes a fifth host. A second shared memory is configured between the first host and the fifth host. Both the first host and the fifth host can obtain data in the second shared memory. The first configuration manner of the shared memory is used as an example. As shown in FIG. 10, the cloud service providing method provided in this embodiment of this application further includes the following steps.

Step 407: The first host stores, in the second shared memory during running of the active virtual instance, the memory data needed for running the active virtual instance.

For an implementation process of step 407, refer to related descriptions in step 403. Details are not described herein again.

Step 408: When the second host fails, the fifth host runs a second standby virtual instance on the fifth host, and when both the first host and the second host fail, the fifth host runs the second standby virtual instance based on the memory data obtained from the second shared memory, to cause the second standby virtual instance to provide a cloud service for the user.

When determining that the second host fails, the first host sends a notification to the fifth host, to indicate the fifth host to create the second standby virtual instance for the active virtual instance. In response to the notification, the fifth host creates and runs the second standby virtual instance on the fifth host. The fifth host further needs to obtain the memory data from the second shared memory, so that when the second host and the first host fail, the second standby virtual instance runs based on the memory data, so that the second standby virtual instance is used for replacing the active virtual instance to provide the cloud service for the user. For a related implementation in the process, refer to related descriptions when the first standby virtual instance on the second host is used as a standby virtual instance for the active virtual instance on the first host. Details are not described herein again.

It should be noted that, in addition to backing up the memory data, the host may further back up other data needed for running a virtual instance, to run a standby virtual instance based on the other data and the memory data. For example, the second host backs up data indicating a processor state and I/O data, so that when the first host fails, the second host runs the first standby virtual instance based on the memory data, the data indicating the processor state, and the I/O data. The data indicating the processor state may be data indicating various processors in a host, for example, data indicating a CPU state and data indicating a GPU. The I/O data may be various types of I/O data, for example, disk I/O data and network I/O data. In an implementation, the hosts may also share the other data through a shared memory. In this case, for an implementation process, refer to the foregoing implementation of sharing the memory data through the shared memory. However, after obtaining the other data from another host, the host does not store the data in a memory, but updates the other data to a virtualization layer. In another implementation, the other data may be shared in another manner. For example, the second host receives the other data sent by the first host through the network. In addition, when the first host shares the other data with the second host through the network, the first host and the second host may periodically share the other data in a checkpoint form. Due to a small data amount of the other data, even if the other data is shared in the checkpoint form, when a service is provided based on the shared other data, impact on service performance may be ignored. When the functions of the first host and the second host are implemented by using the functional modules, the other data may be synchronized by the virtual machine state management module of the first host to the virtual state management module of the second host.

In conclusion, in the cloud service providing method provided in embodiments of this application, the first host runs the active virtual instance, where the active virtual instance is used for providing the cloud service for the user; the second host runs the first standby virtual instance; the first host stores, in the first shared memory during running process of the active virtual instance, the memory data needed for running the active virtual instance; and the second host runs, when the first host fails, the first standby virtual instance based on the memory data obtained from the first shared memory, to cause the first standby virtual instance to provide the cloud service for the user. In this way, hot standby of memory data can be implemented between the first host and the second host through a shared memory. In comparison with a current manner of backing up data based on checkpoint events or another current manner, this manner effectively reduces memory access latency of memory data, improves timeliness and efficiency of hot standby of the memory data, provides a real-time redundancy backup capability, and helps ensure performance of services provided based on backed-up memory data.

It should be noted that a sequence of the steps of the cloud service providing method provided in embodiments of this application may be appropriately adjusted, or steps may be correspondingly added or deleted based on a situation. Any variant method readily figured out by a person skilled in the art within the technical scope disclosed in this application shall fall within the protection scope of this application, and therefore, details are not described.

The following describes a virtual apparatus in embodiments of this application by using an example.

The foregoing describes the cloud service providing method in embodiments of this application. In correspondence to the foregoing method, an embodiment of this application further provides a cloud service providing system. For a diagram of a structure of the cloud service providing system, refer to FIG. 1, FIG. 2, FIG. 3, or FIG. 6. Based on the plurality of components shown in FIG. 1, FIG. 2, FIG. 3, or FIG. 6, the cloud service providing system can perform all or some operations shown in FIG. 4, FIG. 5, FIG. 7, or FIG. 8. It should be understood that the system may include more additional components than the shown components, or some shown components are omitted. This is not limited in this embodiment of this application. Optionally, the cloud service providing system may be configured on a cloud platform. The cloud service system is configured to provide a cloud service based on a virtual instance.

As shown in FIG. 1, FIG. 2, FIG. 3, or FIG. 6, the cloud service system includes a first host and a second host. A first shared memory is configured between the first host and the second host, and both the first host and the second host can obtain data in the first shared memory. The first host is configured to run an active virtual instance, where the active virtual instance is used for providing a cloud service for a user; the second host is configured to run a first standby virtual instance; the first host is further configured to store, in the first shared memory during running of the active virtual instance, memory data needed for running the active virtual instance; and the second host is further configured to run, when the first host fails, the first standby virtual instance based on the memory data obtained from the first shared memory, to cause the first standby virtual instance to provide a cloud service for the user.

Optionally, the first host is configured with a first physical memory, the second host is configured with a first virtual memory and a second physical memory, and a mapping relationship is established between the first physical memory and the first virtual memory; the first host is specifically configured to store the memory data in the first physical memory during running of the active virtual instance; and during running of the active virtual instance, the second host is further configured to: obtain, by accessing the first virtual memory, the memory data stored in the first physical memory, and store the memory data in the second physical memory.

Optionally, the first host is further configured to provide a physical address of the memory data in the first physical memory for the second host; and the second host is specifically configured to access the first virtual memory based on the physical address, to obtain the memory data stored in the first physical memory.

Optionally, the cloud service system further includes a third host, and the third host is configured with a third physical memory. The first host is specifically configured to store the memory data in the third physical memory during running of the active virtual instance; and the second host is further configured to read the memory data from the third physical memory when the first host fails.

Optionally, the first host is further configured to provide a physical address of the memory data in the third physical memory for the second host; and the second host is specifically configured to read the memory data from the third physical memory based on the physical address.

Optionally, the cloud service system further includes a fourth host. The fourth host is configured with a second virtual memory and a fourth physical memory, and a mapping relationship is established between the third physical memory and the second virtual memory. During running of the active virtual instance, the fourth host is further configured to: obtain, by accessing the second virtual memory, the memory data stored in the third physical memory, and store the memory data in the fourth physical memory.

Optionally, the first host is further configured to provide the physical address of the memory data in the third physical memory for the fourth host; and the fourth host is specifically configured to access the second virtual memory based on the physical address, to obtain the memory data stored in the third physical memory.

Optionally, the physical address is provided through a communication bus that supports memory synchronization access semantics, and/or the physical address is provided through a network.

Optionally, the cloud service system further includes a fifth host, a second shared memory is configured between the first host and the fifth host, and both the first host and the fifth host can obtain data in the second shared memory. The first host is further configured to store, in the second shared memory during running of the active virtual instance, the memory data needed for running the active virtual instance. The fifth host is configured to: when the second host fails, run a second standby virtual instance on the fifth host; and when the first host fails, run the second standby virtual instance based on the memory data obtained from the second shared memory, to cause the second standby virtual instance to provide a cloud service for the user.

Optionally, the first host is connected to the second host through the communication bus that supports memory synchronization access semantics. When the second host cannot obtain data from the first host through the communication bus, the second host is specifically configured to run the first standby virtual instance based on the memory data obtained from the first shared memory.

Herein, for a detailed working process of each host in the cloud service providing system, refer to the descriptions in the foregoing method embodiments. For example, the first host implements the functions of the first host according to step 401 and step 403 in the method embodiments, and the second host implements the functions of the second host according to step 402, step 404, and step 405 in the method embodiments. Details are not described herein again in this embodiment of this application.

In conclusion, in the cloud service providing system provided in embodiments of this application, the first host runs the active virtual instance, where the active virtual instance is used for providing the cloud service for the user; the second host runs the first standby virtual instance; the first host stores, in the first shared memory during running process of the active virtual instance, the memory data needed for running the active virtual instance; and the second host runs, when the first host fails, the first standby virtual instance based on the memory data obtained from the first shared memory, to cause the first standby virtual instance to provide the cloud service for the user. In this way, hot standby of memory data can be implemented between the first host and the second host through a shared memory. In comparison with a current manner of backing up data based on checkpoint events or another current manner, this manner effectively reduces memory access latency of memory data, improves timeliness and efficiency of hot standby of the memory data, provides a real-time redundancy backup capability, and helps ensure performance of services provided based on backed-up memory data.

Functions of each host in the cloud service providing system may be implemented by using software or hardware.

In an example of a software functional unit, each host in the cloud service providing system may include code running on a compute instance. The compute instance may include at least one of a physical host (compute device), a virtual machine, and a container. Further, there may be one or more compute instances. For example, each host in the cloud service providing system may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

In an example of a hardware functional unit, each host in the cloud service providing system may include at least one compute device, for example, a server. Alternatively, the hosts in the cloud service providing system may be devices implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in each host in the cloud service providing system may be distributed in a same region, or may be distributed in different regions. A plurality of compute devices included in each host in the cloud service providing system may be distributed in a same AZ, or may be distributed in different AZs. Similarly, the plurality of compute devices included in each host in the cloud service providing system may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, any one of the plurality of hosts in the cloud service providing system may be configured to perform any step in the cloud service providing method. Steps that each host in the cloud service providing system is responsible for implementing may be specified as required, and all functions of the cloud service providing apparatus are implemented by separately implementing different steps in the cloud service providing method by each host in the cloud service providing system.

A person skilled in the art can clearly understand that, for the purpose of convenient and brief description, for detailed working processes of the foregoing components, refer to corresponding content in the foregoing method embodiments. Details are not described herein again.

The following describes a basic hardware structure in embodiments of this application by using an example.

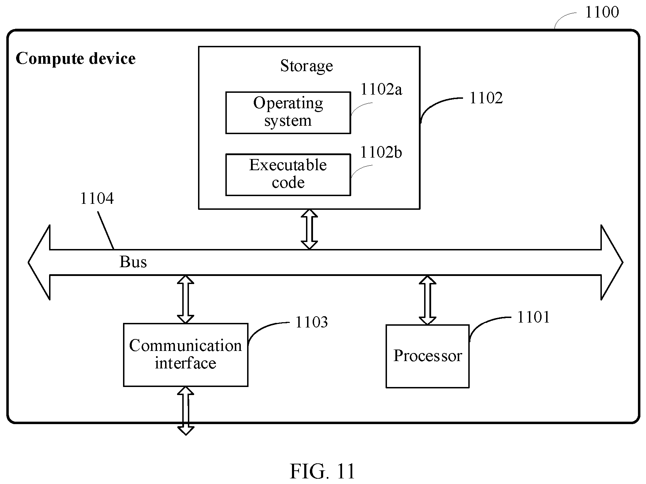

An embodiment of this application provides a compute device. The compute device is configured to implement some or all functions of the cloud service providing method provided in embodiments of this application. FIG. 11 is a diagram of a structure of a compute device according to an embodiment of this application. As shown in FIG. 11, the compute device 1100 includes a processor 1101, a storage 1102, a communication interface 1103, and a bus 1104. The processor 1101, the storage 1102, and the communication interface 1103 are communicably connected to each other through the bus 1104.

The processor 1101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing highperformance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). The processor 1101 may alternatively be an integrated circuit chip and has a signal processing capability. In an implementation process, some or all functions of the cloud service providing method in this application may be implemented by using an integrated logic circuit of hardware in the processor 1101 or instructions in a form of software.

The storage 1102 is configured to store a computer program, and the computer program includes an operating system 1102a and executable code (namely, program instructions) 1102b. For example, the storage 1102 is a read-only memory, another type of static storage device that can store static information and instructions, a random access memory, another type of dynamic storage device that can store information and instructions, an electrically erasable programmable read-only memory, a compact disc read-only memory, another optical disk storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected executable code in a form of instructions or a data structure and that can be accessed by a computer, but is not limited thereto. For example, the storage 1102 is configured to store an egress queue. For example, the storage 1102 exists independently, and is connected to the processor 1101 through the bus 1104. Alternatively, the storage 1102 is integrated with the processor 1101. The storage 1102 may store the executable code. When the executable code stored in the storage 1102 is executed by the processor 1101, the processor 1101 is configured to perform some or all functions of the cloud service providing method provided in embodiments of this application. For an implementation in which the processor 1101 performs this process, correspondingly refer to related descriptions in the foregoing embodiments. The storage 1102 may further include a software module, data, and the like that are needed by another running process such as the operating system.

The communication interface 1103 uses a transceiver module, for example, but not limited to a transceiver, to implement communication with another device or a communication network. For example, the communication interface 1103 may be any one or any combination of the following components having network access functions: a network interface (for example, an Ethernet interface) and a wireless network interface card.

The bus 1104 is any type of communication bus configured to implement an interconnection between internal components (for example, the storage 1102, the processor 1101, and the communication interface 1103) in the compute device, for example, a system bus. In this embodiment of this application, an example in which the foregoing components in the compute device are interconnected through the bus 1104 is used for description. Optionally, the foregoing components in the compute device 1100 may be communicably connected to each other in another connection manner other than a manner using the bus 1104. For example, the foregoing components in the compute device 1100 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. Specific implementations of the foregoing components are not limited in embodiments of this application. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When software is configured to implement the embodiments, all or some of the embodiments may be implemented in a form of a computer program product. The computer program product that provides a program development platform includes one or more computer instructions. When these computer program instructions are loaded and executed on a compute device, all or some of functions of the cloud service providing method provided in embodiments of this application are implemented.

The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

Optionally, for a structure of the at least one compute device included in the compute device cluster, refer to the compute device 1100 shown in FIG. 11. Storages 1102 in one or more compute devices 1100 in the compute device cluster may store same instructions for performing the cloud service providing method.

In some possible implementations, the storages 1102 in the one or more compute devices 1100 in the compute device cluster may separately store a part of the instructions for performing the cloud service providing method. In other words, a combination of the one or more compute devices 1100 may jointly execute the instructions for performing the cloud service providing method.

It should be noted that storages 1102 in different compute devices 1100 in the compute device cluster may store different instructions respectively used for performing some functions of the cloud service providing apparatus. In other words, the instructions stored in the storages 1102 in different compute devices 1100 may implement functions of different hosts.

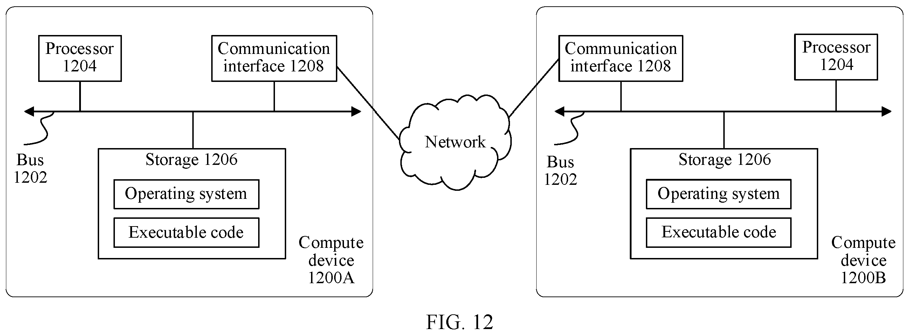

In some possible implementations, the one or more compute devices in the compute device cluster may be connected through a network. The network may be a wide area network, a local area network, or the like. FIG. 12 shows a possible implementation. As shown in FIG. 12, two compute devices 1200A and 1200B are connected through a network. Specifically, each compute device is connected to the network through a communication interface in the compute device. In this possible implementation, each of the compute devices 1200A and 1200B include a bus 1202, a processor 1204, a storage 1206, and a communication interface 1208. The storage 1206 in the compute device 1200A stores instructions for performing a function of a first host. In addition, the storage 1206 in the compute device 1200B stores instructions for performing a function of a second host.

It should be understood that functions of the compute device 1200A shown in FIG. 12 may alternatively be completed by a plurality of compute devices 1200. Similarly, functions of the compute device 1200B may alternatively be completed by the plurality of compute devices 1200. In addition, a deployment manner of the modules configured to implement the cloud service providing method in the compute device may alternatively be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a compute device, the compute device is caused to implement the cloud service providing method provided in embodiments of this application.

An embodiment of this application further provides a computer program product including instructions. When the computer program product runs on a computer, the computer is caused to implement the cloud service providing method provided in embodiments of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, original data, executable code, and the like in this application are obtained under full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and the principle of this application shall fall within the protection scope of this application.

## Claims

1. A cloud service providing method, wherein the method is applied to a cloud service system, the cloud service system is configured to provide a cloud service based on a virtual instance, the cloud service system comprises a first host and a second host, a first shared memory is configured between the first host and the second host, and both the first host and the second host can obtain data in the first shared memory; and the method comprises:
running, by the first host, an active virtual instance, wherein the active virtual instance is used for providing a cloud service for a user;
running, by the second host, a first standby virtual instance;
storing, by the first host in the first shared memory during running of the active virtual instance, memory data needed for running the active virtual instance; and
running, by the second host when the first host fails, the first standby virtual instance based on the memory data obtained from the first shared memory, to cause the first standby virtual instance to provide a cloud service for the user.

2. The method according to claim 1, wherein the first host is configured with a first physical memory, the second host is configured with a first virtual memory and a second physical memory, and a mapping relationship is established between the first physical memory and the first virtual memory;
storing, by the first host in the first shared memory during running of the active virtual instance, the memory data needed for running the active virtual instance comprises:
storing, by the first host, the memory data in the first physical memory during running of the active virtual instance; and
after storing, by the first host in the first shared memory during running of the active virtual instance, the memory data needed for running the active virtual instance, the method further comprises:
during running of the active virtual instance, obtaining, by the second host by accessing the first virtual memory, the memory data stored in the first physical memory, and storing the memory data in the second physical memory.

3. The method according to claim 2, wherein after storing, by the first host, the memory data in the first physical memory, the method further comprises:
providing, by the first host, a physical address of the memory data in the first physical memory for the second host; and
obtaining, by the second host by accessing the first virtual memory, the memory data stored in the first physical memory comprises:
accessing, by the second host, the first virtual memory based on the physical address, to obtain the memory data stored in the first physical memory.

4. The method according to claim 1, wherein the cloud service system further comprises a third host, and the third host is configured with a third physical memory;
storing, by the first host in the first shared memory during running of the active virtual instance, the memory data needed for running the active virtual instance comprises:
storing, by the first host, the memory data in the third physical memory during running of the active virtual instance; and
before running, by the second host, the first standby virtual instance based on the memory data obtained from the first shared memory, to cause the first standby virtual instance to provide the cloud service for the user, the method further comprises:
reading, by the second host, the memory data from the third physical memory when the first host fails.

5. The method according to claim 4, wherein after storing, by the first host, the memory data in the third physical memory, the method further comprises:
providing, by the first host, a physical address of the memory data in the third physical memory for the second host; and
reading, by the second host, the memory data from the third physical memory comprises:
reading, by the second host, the memory data from the third physical memory based on the physical address.

6. The method according to claim 4 or 5, wherein the cloud service system further comprises a fourth host, the fourth host is configured with a second virtual memory and a fourth physical memory, a mapping relationship is established between the third physical memory and the second virtual memory, and the method further comprises:
during running of the active virtual instance, obtaining, by the fourth host by accessing the second virtual memory, the memory data stored in the third physical memory, and storing the memory data in the fourth physical memory.

7. The method according to claim 6, wherein after storing, by the first host, the memory data in the third physical memory, the method further comprises:
providing, by the first host, the physical address of the memory data in the third physical memory for the fourth host; and
obtaining, by the fourth host by accessing the second virtual memory, the memory data stored in the third physical memory comprises:
accessing, by the fourth host, the second virtual memory based on the physical address, to obtain the memory data stored in the third physical memory.

8. The method according to claim 3, 5, or 7, wherein the physical address is provided through a communication bus that supports memory synchronization access semantics, and/or the physical address is provided through a network.

9. The method according to any one of claims 1 to 8, wherein the cloud service system further comprises a fifth host, a second shared memory is configured between the first host and the fifth host, both the first host and the fifth host can obtain data in the second shared memory, and the method further comprises:
storing, by the first host in the second shared memory during running of the active virtual instance, the memory data needed for running the active virtual instance; and
when the second host fails, running, by the fifth host, a second standby virtual instance on the fifth host, and when the first host fails, running the second standby virtual instance based on the memory data obtained from the second shared memory, to cause the second standby virtual instance to provide a cloud service for the user.

10. The method according to any one of claims 1 to 9, wherein the first host is connected to the second host through the communication bus that supports memory synchronization access semantics, and running, by the second host when the first host fails, the first standby virtual instance based on the memory data obtained from the first shared memory comprises:
when the second host cannot obtain data from the first host through the communication bus, running, by the second host, the first standby virtual instance based on the memory data obtained from the first shared memory.

11. A cloud service providing system, wherein the cloud service system is configured to provide a cloud service based on a virtual instance, the cloud service system comprises a first host and a second host, a first shared memory is configured between the first host and the second host, and both the first host and the second host can obtain data in the first shared memory;
the first host is configured to run an active virtual instance, wherein the active virtual instance is used for providing a cloud service for a user;
the second host is configured to run a first standby virtual instance;
the first host is further configured to store, in the first shared memory during running of the active virtual instance, memory data needed for running the active virtual instance; and
the second host is further configured to run, when the first host fails, the first standby virtual instance based on the memory data obtained from the first shared memory, to cause the first standby virtual instance to provide a cloud service for the user.

12. The system according to claim 11, wherein the first host is configured with a first physical memory, the second host is configured with a first virtual memory and a second physical memory, and a mapping relationship is established between the first physical memory and the first virtual memory;
the first host is specifically configured to store the memory data in the first physical memory during running of the active virtual instance; and
during running of the active virtual instance, the second host is further configured to: obtain, by accessing the first virtual memory, the memory data stored in the first physical memory, and store the memory data in the second physical memory.

13. The system according to claim 12, wherein
the first host is further configured to provide a physical address of the memory data in the first physical memory for the second host; and
the second host is specifically configured to access the first virtual memory based on the physical address, to obtain the memory data stored in the first physical memory.

14. The system according to claim 11, wherein the cloud service system further comprises a third host, and the third host is configured with a third physical memory;
the first host is specifically configured to store the memory data in the third physical memory during running of the active virtual instance; and
the second host is further configured to read the memory data from the third physical memory when the first host fails.

15. The system according to claim 14, wherein
the first host is further configured to provide a physical address of the memory data in the third physical memory for the second host; and
the second host is specifically configured to read the memory data from the third physical memory based on the physical address.

16. The system according to claim 14 or 15, wherein the cloud service system further comprises a fourth host, the fourth host is configured with a second virtual memory and a fourth physical memory, and a mapping relationship is established between the third physical memory and the second virtual memory; and
during running of the active virtual instance, the fourth host is further configured to: obtain, by accessing the second virtual memory, the memory data stored in the third physical memory, and store the memory data in the fourth physical memory.

17. The system according to claim 16, wherein
the first host is further configured to provide the physical address of the memory data in the third physical memory for the fourth host; and
the fourth host is specifically configured to access the second virtual memory based on the physical address, to obtain the memory data stored in the third physical memory.

18. The system according to claim 13, 15, or 17, wherein the physical address is provided through a communication bus that supports memory synchronization access semantics, and/or the physical address is provided through a network.

19. The system according to any one of claims 11 to 18, wherein the cloud service system further comprises a fifth host, a second shared memory is configured between the first host and the fifth host, and both the first host and the fifth host can obtain data in the second shared memory; and
the first host is further configured to store, in the second shared memory during running of the active virtual instance, the memory data needed for running the active virtual instance; and
the fifth host is configured to: when the second host fails, run a second standby virtual instance on the fifth host; and when the first host fails, run the second standby virtual instance based on the memory data obtained from the second shared memory, to cause the second standby virtual instance to provide a cloud service for the user.

20. The system according to any one of claims 11 to 19, wherein the first host is connected to the second host through the communication bus that supports memory synchronization access semantics; and
when the second host cannot obtain data from the first host through the communication bus, the second host is specifically configured to run the first standby virtual instance based on the memory data obtained from the first shared memory.

21. A compute device cluster, comprising a plurality of compute devices, wherein the plurality of compute devices comprise a plurality of processors and a plurality of storages, the plurality of storages store program instructions, and the plurality of processors run the program instructions, to cause the compute device cluster to perform the method according to any one of claims 1 to 10.

22. A computer-readable storage medium, comprising program instructions, wherein when the program instructions are run on a compute device, the compute device is caused to perform the method according to any one of claims 1 to 10.

23. A computer program product comprising instructions, wherein when the instructions are run by a compute device cluster, the compute device cluster is caused to perform the method according to any one of claims 1 to 10.
